# EUROPÄISCHE PATENTSCHRIFT

(11) **EP 1 288 494 B1**
(45) Veröffentlichungstag und Bekanntmachung des Hinweises auf die Patenterteilung: **06.07.2005**
(21) Anmeldenummer: 02019454.4
(22) Anmeldetag: 30.08.2002
(51) Int. Cl.: F03D 11/00, G01P 5/14, G01P 5/16, G01P 5/165, G01P 13/04, G01P 21/02, B64D 43/02

(54) **Windvektorbestimmungsgerät**
Apparatus for determining the windvector
Dispositif pour déterminer la direction du vent

(30) Priorität: 31.08.2001 DE 20114351 U
(43) Veröffentlichungstag der Anmeldung: 05.03.2003
(73) Patentinhaber: IXIST Messtechnik GmbH, 89287 Bellenberg (DE)
(72) Erfinder: Ritzinger, Herbert, 83109 Grosskarolinenfeld (DE); Ritzinger, Klaus, 83559 Kolbermoor (DE); Ritzinger, Robert, 83556 Griesstätt (DE)
(74) Vertreter: Zeitler, Giselher, Dipl.-Ing.

(56) Entgegenhaltungen:
- WO-A-99/61923
- US-A- 3 585 859
- US-A- 4 350 314
- US-A- 4 378 696

## Beschreibung

Die Erfindung betrifft ein Windvektorbestimmungsgerät für eine Winkdraftanlage gemäß dem Oberbegriff des Anspruchs 1.

Meßsysteme der gattungsgemäßen Art zur Ermittlung von Windrichtung und Windgeschwindigkeit sind an sich bekannt (WO-A-99 61923, US-A-4 350 314 und US-A-4 378 696).

Bei bekannten Windkraftanlagen wird jedoch die vorherrschende Windrichtung in der Regel mittels Windfahnen ermittelt und die vorherrschende Windgeschwindigkeit vorwiegend über rotierende Anemometer, Hitzdrahtanemometer u. dgl. gemessen. In Abhängigkeit von entsprechenden Meßwerten für Windrichtung und Windgeschwindigkeit wird dann die Gondel der Windkraftanlage ausgerichtet, und es werden die Rotorblätter des Rotors der Windkraftanlage in ihrem Anstellwinkel verändert. Bei einigen der vorgenannten Meßsysteme sind bewegte Teile, nämlich Windfahne bzw. Schaufelräder, erforderlich. Das Meßergebnis hängt hier von der Beweglichkeit der Windfahne bzw. der Schaufelräder ab. Die Beweglichkeit nimmt mit zunehmender Lebensdauer ab, so daß diese Systeme teilweise schon nach kurzer Zeit ersetzt werden müssen. Die Meßsysteme Hitzdraht- oder Doppler-Anemometer sind fremdkörperempfindlich, und es ist für die korrekte Auswertung zusätzlich noch eine Information über Temperatur, Luftfeuchte usw. notwendig, um auf die für die Windkraftanlage entscheidenden Druckverhältnisse schließen zu können.

Üblicherweise werden die zuvor genannten Meßsysteme am Ende der Gondel der Windkraftanlage installiert, d.h. die Windgeschwindigkeit wird erst dann erfaßt, wenn der Wind den Rotor der Windkraftanlage bereits passiert hat. Ebenso wird die Windfahne von der durch die Rotorblätter durchwirbelten Luft beeinflußt. Diese Lage der Meßsysteme bedingt, daß die Meßergebnisse eine exakte Ausrichtung der Gondel nur bis zu einer bestimmten Genauigkeit zulassen. Desweiteren kann die Windgeschwindigkeitsmessung an dieser Stelle bei böigem Wind nur feststellen, daß eine Böe den Rotor gerade passiert hat. Bei herkömmlichen, blattverstellbaren ("Pitch"-) Anlagen reißt daher zuerst die Strömung am Flügel ab ("Stall-Effekt"), und erst danach wird über die Messung der Windgeschwindigkeit dieser unerwünschte Zustand detektiert. Dies führt zu erheblichen Flügel- und Systembelastungen.

Der Erfindung liegt daher die Aufgabe zugrunde, ein Windvektorbestimmungsgerät für eine Windkraftanlage zur Beseitigung der geschilderten Nachteile derart auszugestalten, daß eine Windvektormessung mit exakter Richtungs- und Geschwindigkeitserfassung auf einfache Weise zuverlässig möglich ist.

Diese Aufgabe wird durch die Erfindung mit den Merkmalen des Anspruchs 1 gelöst. Vorteilhafte Ausgestaltungen hiervon sind in den weiteren Ansprüchen beschrieben.

Das erfindungsgemäße Windvektorbestimmungsgerät erbringt den entscheidenden Vorteil, daß mit einem einzigen Meßgerät gleichzeitig die Abweichung der Ausrichtung des Windvektorbestimmungsgerätes von der vorherrschenden Windrichtung sowie die Windgeschwindigkeit meßbar sind. Auf der Basis der Windgeschwindigkeitsmessung kann der jeweils optimale Anstellwinkel der Rotorblätter gegen den Wind über einen Rechner ermittelt und somit dem Wind die größtmögliche Leistungsausbeute entnommen werden, ohne das System zu hoch zu belasten. Demgegenüber kann auf der Basis der gleichzeitigen Windrichtungsmessung die Ausrichtung der Gondel der Windkraftanlage in Windrichtung schnell und exakt durchgeführt werden.

Das erfindungsgemäße Windvektorbestimmungsgerät kommt stromauf vor dem Rotor der Windkraftanlage zum Einsatz, so daß unerwünschte Zustände, wie beispielsweise ein Strömungsabriß an den Rotorblättern, durch rechtzeitige Gegenmaßnahmen schnell und wirksam verhindert werden können. Dadurch erfolgt eine Reduzierung der Flügel- und Systembelastungen im Betrieb einer Windkraftanlage. Trotz Bestimmung der Windrichtung bzgl. einer Winkelhalbierenden zwischen den Staurohren benötigt das erfindungsgemäße Windvektorbestimmungsgerät zur Windrichtungsbestimmung keine rotierenden Teile.

Von besonderem Vorteil ist weiterhin, daß das erfindungsgemäße Windvektorbestimmungsgerät auch an bereits bestehenden Windkraftanlagen nachgerüstet werden kann.

Durch die Erfindung wird der Vorteil erzielt, daß Änderungen des Betriebszustandes der Windkraftanlage, die durch Windrichtungs- und/oder -geschwindigkeits- änderungen bedingt sind, bereits frühzeitig erkannt und ausgeführt werden können, bevor sich unerwünschte Strömungsverhältnisse bzw. Lastzustände am Rotor ergeben.

Die Erfindung wird im folgenden anhand der Zeichnung näher erläutert. Diese zeigt in:
- Fig. 1: eine bevorzugte Ausführungsform des erfindungsgemäßen Windvektorbestimmungsgerätes in Draufsicht,
- Fig. 2: in Seitenansicht und
- Fig. 3: vergrößert im Querschnitt entlang Linie II-II von Fig. 2,
- Fig. 4: ein Geräteträgerrohr des Windvektorbestimmungsgerätes mit Mehrkammer-Niedrigst-Druckaufnehmermeßgerät im Schnitt und
- Fig. 5: den Übergang des Geräteträgerrohres zu einer Rotornabe im drehbaren Einbau mit Lagerung im Schnitt.

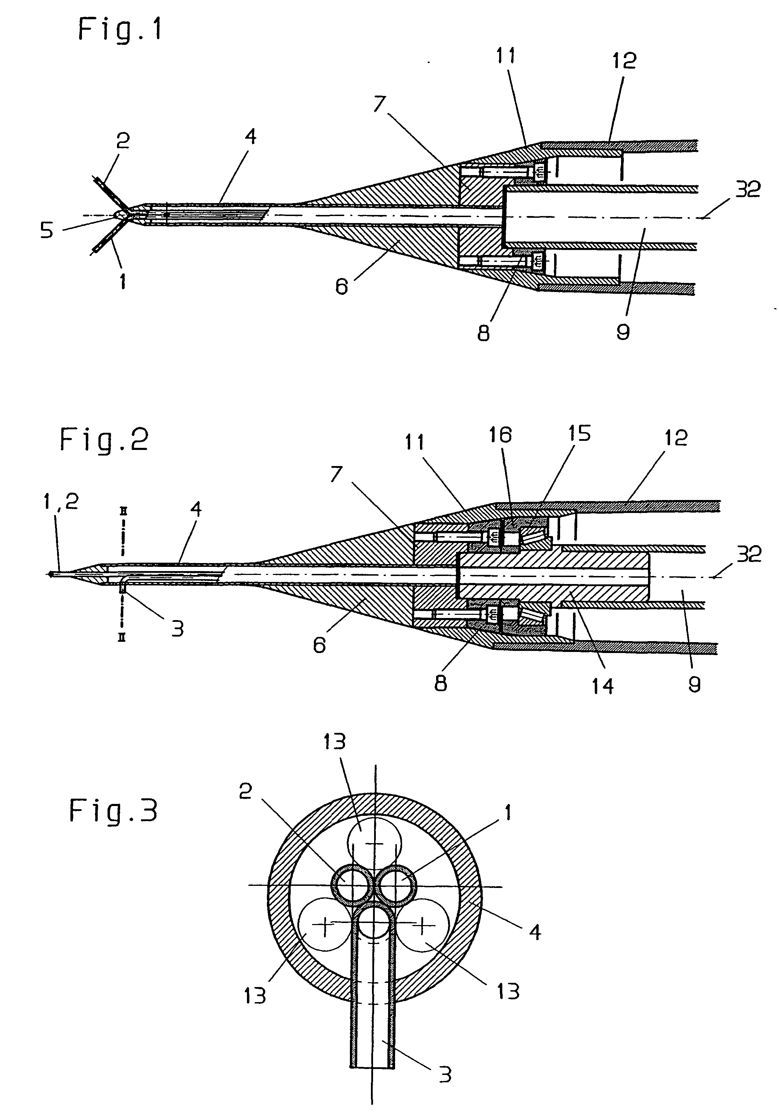

Das in der Zeichnung dargestellte Windvektorbestimmungsgerät ist zum stationären Betrieb an dem Rotor einer nicht dargestellten Windkraftanlage ausgebildet. Wie aus Fig. 1 bis 3 ersichtlich, weist das dargestellte Windvektorbestimmungsgerät zum gleichzeitigen Erfassen von Windrichtung und Windgeschwindigkeit zwei Meßrohre 1 und 2 auf, die jeweils im gleichen Winkel von 45° zur Gerätehauptachse 32 ausgerichtet sind und zur Messung des Staudruckes dienen.

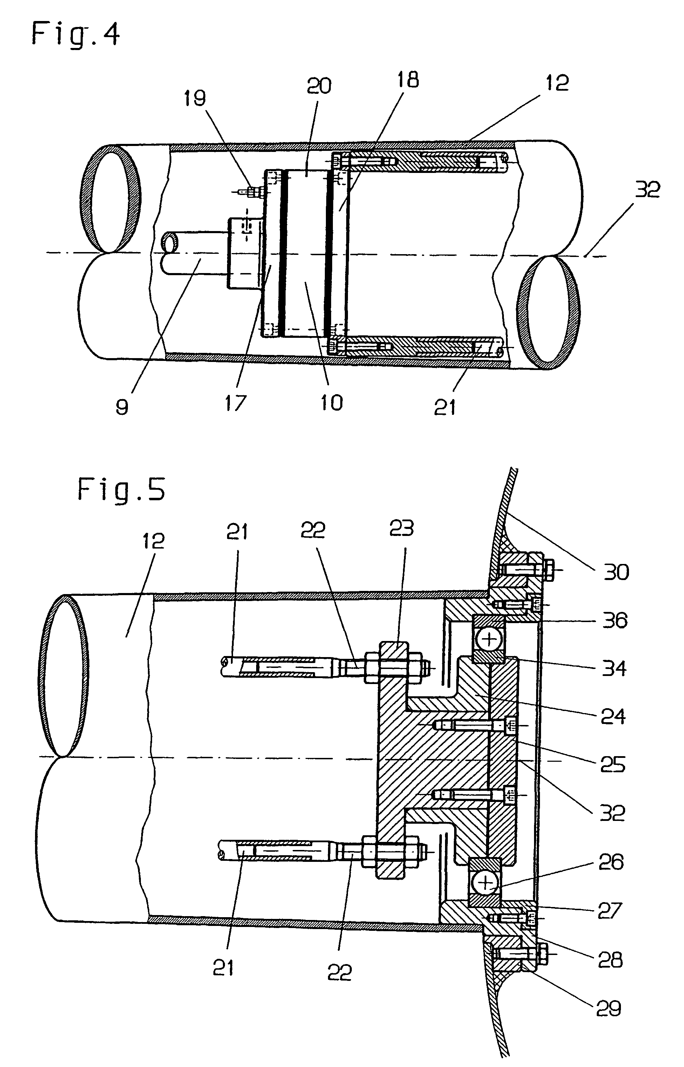

Zusätzlich ist, wie aus Fig. 2 ersichtlich, ein statisches Druckrohr 3 vorgesehen, das senkrecht zur Gerätehauptachse 32 ausgerichtet ist. Alle drei Meßrohre 1, 2 und 3 sind von einem Schutzrohr 4 ummantelt, das an seinem vorderen Ende durch einen Nasenkeil 5 verschlossen ist. Das dem vorderen Ende gegenüberliegende andere Ende des Schutzrohres 4 ist in einem Fixierflansch 7 befestigt, der mit einem Anschlußflansch 8 verschraubt ist. Dieser Anschlußflansch 8 ist mit einem Verbindungsrohr 9 fest verbunden, das auf seiner Gegenseite mit einem Mehrkammer-Niedrigst-Druckaufnehmermeßgerät 10 gekoppelt ist (vgl. Fig. 4).

Zur strömungsgünstigen Ausbildung des Windvektorbestimmungsgerätes ist stromauf des Fixierflansches 7 ein Strömungskegel 6 angebracht. Dieser geht mit seiner Außenkontur in einen Lippenflansch 11 über, der an einem schmalen Ende eines lanzenförmigen Geräteträgerrohres 12 befestigt ist.

Wenn das beschriebene Windvektorbestimmungsgerät stehend betrieben wird, drehen sich die Rohre 1, 2, 3 zusammen mit dem Druckaufnehmermeßgerät 10 im lanzenförmigen Geräteträgerrohr 12. In diesem Fall ist die Einheit an beiden Enden gelagert. Eine derartige Lagerung auf der Seite der Rohre 1, 2, 3 ist in Fig. 2 dargestellt. Hierbei ist in das Verbindungsrohr 9 ein Bolzen 14 eingesetzt. Dieser trägt ein Rollenlager 15, das sich über einen Verbindungsring 16 am Lippenflansch 11 abstützt.

Bei der Ausführungsform gemäß Fig. 3 ist eine Heizung 13 für die Rohre 1, 2, 3 vorgesehen. Die Heizung 13 umfaßt elektrische Widerstände, die über einen Temperatursensor gesteuert mit elektrischer Energie versorgt werden, um ein Einfrieren bzw. Vereisen der Rohre 1, 2, 3 zu verhindern.

Das Mehrkammer-Niedrigst-Druckaufnehmermeßgerät 10 gemäß Fig. 4 bildet zugleich auch die Verbindung zwischen den Rohren 1, 2, 3 und einer rückwärtigen Lagerung an der Rotornabe. Zu diesem Zweck ist ein Kopfdeckel 17 vorgesehen, an dem das Verbindungsrohr 9 festlegbar ist. Auf dieser Seite des Druckaufnehmermeßgerätes 10 sind zusätzlich Druckanschlüsse 19 für den statischen Druck und die Staudrücke vorgesehen. An einem Bodendeckel 18 sind Verbindungsstangen 21 angeschraubt. Seitlich am Druckaufnehmermeßgerät 10 ist ein Kabelausgang 20 für die Versorgung und die Meßsignale des Druckaufnehmermeßgerätes 10 ausgebildet. Das lanzenförmige Geräteträgerrohr 12 ist mit seiner dem Druckaufnehmermeßgerät 10 abgewandten Seite mit der Rotornabe verschraubt. Das Druckaufnehmermeßgerät 10 wandelt über ein nicht dargestelltes Mehrkammersystem die in den Rohren 1, 2, 3 jeweils vorhandenen Staudrücke, die über geschlossene Druckleitungen von den Rohren 1, 2, 3 an das Mehrkammersystem übertragen werden, in bekannter Weise in entsprechende elektrische Signale um. Die elektrischen Signale werden dann aufbereitet und beispielsweise telemetrisch oder direkt in die Gondel übertragen.

Eine beispielhafte Lagerungsvariante für die rückwärtige Lagerung des Druckaufnehmermeßgerätes 10 und die mit diesem verbundenen Rohren 1, 2, 3 ist in Fig. 5 dargestellt. Dabei sind die Verbindungsstangen 21 derart mit einem Anschlußflansch 23 verschraubt, daß die axiale Lage der Rohre 1, 2, 3 über Schraubenenden 22 einstellbar ist. Ein Rollenlager 26 ist mit einem Innenring 34 zwischen einem Stützflansch 24 und einem Andruckflansch 25 gehalten, wobei der Andruckflansch 25 mit dem Anschlußflansch 23 verschraubt ist. Ein Außenring 36 des Rollenlagers 26 liegt in einem Anschlußring 28, der mit dem Geräteträgerrohr 12 fest verbunden ist. Über einen Andruckring 27, der mit dem Anschlußring 28 verschraubt ist, wird das Lager gehalten. Der Anschlußring 28 ist mit einem Befestigungsflansch 29 verschraubt, der seinerseits in einer Nabenverkleidung 30 befestigt ist.

Der Innenraum des Geräteträgerrohres 12 wird bei Bedarf klimatisiert. Für Servicezwecke ist das Windvektorbestimmungsgerät derart befestigt, daß es in die Gondel zurückgezogen werden kann. Hierzu ist das Geräteträgerrohr 12 in geeigneter Weise hohlzylindrisch ausgebildet.

### Das beschriebene Windvektorbestimmungsgerät funktioniert folgendermaßen:

Der Windvektor bzw. die Abweichung der Windrichtung von der Gerätehauptachse 32 wird mittels der Meßrohre 1, 2 und 3 an der Spitze des Schutzrohres 4 ermittelt, das mit der Rotornabe verbunden ist. Dabei sind die Enden der beiden Meßrohre 1 und 2 jeweils im Winkel von 45° zur Gerätehauptachse 32 ausgerichtet. Mittels der Meßrohre 1 und 2 erfolgt in Verbindung mit dem statischen Druckohr 3, das senkrecht zur Gerätehauptachse 32 ausgerichtet ist, die Bestimmung der Windgeschwindigkeit nach dem Staudruckprinzip. Aufgrund der 45°-Ausrichtung der Meßrohre 1 und 2 ergibt sich dann eine Differenz des Staudruckes zum Referenzdruck im Druckrohr 3, wenn die Gerätehauptachse 32 nicht in Windrichtung ausgerichtet ist. Sind die Differenzen der Staudrücke der beiden Meßrohre 1 und 2 gegen den gemeinsamen Referenzdruck im Druckrohr 3 gleich, so steht die Gerätehauptachse 32 exakt in Windrichtung.

Der Referenzdruck ist der statische Druck des unter 90° gegen die Gerätehauptachse 32 ausgerichteten Druckrohres 3. Aus der Druckdifferenz zwischen Meßrohr 1 bzw. 2 und statischem Druckrohr 3 wird unter Berücksichtigung der Tatsache, daß der an den Meßrohren 1 und 2 gemessene Staudruck gleich dem 1/√2-fachen Wert des wahren Staudrucks ist, der Betrag der Windgeschwindigkeit bestimmt.

Die Signalübertragung in den geschlossenen Druckleitungen der Meßrohre 1, 2, 3 erfolgt mit Schallgeschwindigkeit von den jeweiligen Rohrmündungen zu Meßkammern im Mehrkammer-Niedrigst-Druckaufnehmermeßgerät 10. Dies ist wesentlich schneller ist als die anströmende Windgeschwindigkeit. Dadurch ergibt sich eine Vorwarnzeit bei Windböen, die dadurch noch vergrößert wird, daß der Druckumwandler 10 nicht in der Rotornabe, sondern bereits im Träger angeordnet ist. Für eine schnelle Reaktionszeit des Systems sind die geschlossenen Druckleitungen zwischen den Rohren 1, 2, 3 und den Meßkammern des Druckaufnehmermeßgerätes 10 sehr klein dimensioniert.

Durch die beschriebene zweiseitige Lagerung des Windvektorbestimmungsgerätes kann dieses gegen die Rotordrehrichtung motorisch so angetrieben werden, daß die Meßrohre 1 und 2 immer horizontal ausgerichtet sind. Dabei ist das Druckrohr 3 zur Erfassung des statischen Druckes nach unten gerichtet, damit die Rohröffnung gegen Regen geschützt ist.

Wird das Windvektorbestimmungsgerät fest mit dem Rotor verbunden, d.h. ohne die dargestellte Lagerung, so drehen sich die Meßrohre 1, 2, 3 mit dem Rotor. Hierbei ergeben sich für die horizontale Windrichtung sinusförmige Signale, die entsprechend elektronisch oder auf andere geeignete Weise aufbereitet werden, und zwar derart, daß sie zum Ausrichten der Gondel der Windkraftanlage in Windrichtung verwendet werden können.

Das beschriebene Windvektorbestimmungsgerät bestimmt, wie oben erläutert, die Windrichtung bzgl. der Gerätehauptachse 32, welche die Winkelhalbierende zwischen dem von den Meßrohren 1, 2 eingeschlossenen Winkel (vorzugsweise 90°) darstellt. Aufgrund dieser Anordnung ergeben sich, wie bereits erläutert, unterschiedliche Staudrücke in den Meßrohren 1, 2 in bezug auf den Referenzdruck im statischen Druckrohr 3, wenn der Wind nicht genau aus der Richtung der Winkelhalbierenden 32 kommt. Jedoch auch Windrichtungen aus Winkeln größer als 90° bzgl. der Winkelhalbierenden 32 können erkannt und erfaßt werden. Hierbei ergeben sich nämlich in den Meßrohren 1, 2 Unterdrücke in bezug auf den Referenzdruck im statischen Druckrohr 3.

Das Mehrkammer-Niedrigst-Druckaufnehmermeßgerät 10 ist beim dargestellten Ausführungsbeispiel mit drei Kammern ausgebildet, wobei die äußeren Kammern jeweils mit einem der Meßrohre 1, 2 verbunden sind, während die mittlere Kammer mit dem statischen Druckrohr 3 verbunden ist, so daß in der mittleren Kammer der Referenzdruck herrscht. Es werden dann zwei unabhängige Druckmessungen der Außenkammern jeweils zur mittleren Kammer durchgeführt.

## Patentansprüche

1. Windvektorbestimmungsgerät für eine Windkraftanlage, mit einem ersten Staurohr (1) mit einer Staudrucköffnung, einem statischen Druckrohr (3) mit einer Referenzdrucköffnung und einem mit Staurohr (1) und Druckrohr (3) verbundenen Druckumwandler (10), wobei
- wenigstens ein zweites, gleichfalls mit dem Druckumwandler (10) verbundenes Staurohr (2) mit Staudrucköffnung vorgesehen ist, die bezüglich der Staudrucköffnung des ersten Staurohres (1) in eine andere Richtung im Raum ausgerichtet ist, und
- die Staudrucköffnungen der beiden Staurohre (1, 2) in einer gemeinsamen Ebene angeordnet, jedoch jeweils in einem vorbestimmten gleichen Winkel zur Gerätehauptachse (32), insbesondere im Winkel von 45°, ausgerichtet sind und einen Winkel von 90° zur Ausrichtung der Referenzdrucköffnung des statischen Druckrohrs (3) aufweisen,
**dadurch gekenntzeichnet,**
- **daß** die Staurohre (1, 2), das statische Druckrohr (3) und der Druckumwandler (10) als Einheit ausgebildet und drehbar innerhalb eines gemeinsamen Geräteträgerrohres (12) gelagert sind, das stromauf vor dem Rotor der Windkraftanlage angeordnet und mit der Rotornabe verbunden ist.

2. Gerät nach Anspruch 1, **dadurch gekennzeichnet, daß** der Druckumwandler (10) als Mehrkammer-Niedrigst-Druckaufnehmermeßgerät ausgebildet ist.

3. Gerät nach einem der vorhergehenden Ansprüche, **dadurch gekennzeichnet, daß** eine Heizvorrichtung (13) und/oder eine Klimatisierungsvorrichtung für die Staurohre (1, 2) und das statische Druckrohr (3) vorgesehen ist.

4. Gerät nach einem der vorhergehenden Ansprüche, **dadurch gekennzeichnet, daß** zwischen den Staurohren (1, 2) sowie dem statischen Druckrohr (3) einerseits und dem Druckumwandler (10) andererseits Druckleitungen angeordnet sind, wobei Bypassleitungen zum Belüften der Druckleitungen vorgesehen sind.

5. Gerät nach einem der vorhergehenden Ansprüche, **dadurch gekennzeichnet, daß** eine Funkverbindung, insbesondere eine Telemetrieverbindung, zwischen dem Rotor der Windkraftanlage und dem Druckumwandler (10) zum Übertragen von Meßdaten vorgesehen ist.

## Claims

1. Wind vector determining device for a wind power system, having a first Pitot tube (1) with a flow pressure opening, a static pressure tube (3) with a reference pressure opening and a pressure transducer (10) linked to the Pitot tube (1) and the pressure tube (3), whereby at least one second Pitot tube (2) also linked to the pressure transducer (10) is provided with a flow pressure opening, which is oriented in a different direction relative to the flow pressure opening of the first Pitot tube (1), and the flow pressure openings of the two Pitot tubes (1, 2) are arranged in a common plane, but each at the same predetermined angle to the device main axis (32), in particular at an angle of 45° and form an angle of 90° to the orientation of the reference pressure opening of the static pressure tube (3), **characterised in that** the Pitot tubes (1, 2), the static pressure tube (3) and the pressure transducer (10) are formed as a unit and are rotatably mounted within a common equipment carrying tube (12) which is arranged upstream before the rotor of the wind power system and is linked to the rotor hub.

2. Device according to claim 1, **characterised in that** the pressure transducer (10) is designed as a multiple chamber lowest pressure detecting device.

3. Device according to one of the previous claims, **characterised in that** a heating device (13) and/or an acclimatisation apparatus for the Pitot tubes (1, 2) and the static pressure tube (3) is provided.

4. Device according to one of the previous claims, **characterised in that** between the Pitot tubes (1, 2) and the static pressure tube (3) on the one hand, and the pressure transducer (10) on the other hand, pressure lines are arranged, whereby bypass lines for ventilating the pressure lines are provided.

5. Device according to one of the previous claims, **characterised in that** a radio connection, in particular a telemetry connection, is provided between the rotor of the wind power system and the pressure transducer (10) for transmitting measurement data.

## Revendications

1. Appareil de détermination vectorielle du vent pour une installation éolienne, comportant un premier tube de Pitot (1) avec une ouverture de pression dynamique, un tube de pression statique (3) avec une ouverture de pression de référence et un convertisseur de pression (10) relié au tube de Pitot (1) et au tube de pression (3), et
- il est prévu au moins un deuxième tube de Pitot (2) également relié au convertisseur de pression (10), avec une ouverture de pression dynamique qui est orientée dans une autre direction dans l'espace par rapport à l'ouverture de pression dynamique du premier tube de Pitot (1), et
- les ouvertures de pression dynamique des deux tubes de Pitot (1, 2) sont agencées dans un plan commun, mais orientées chacune sous un angle égal prédéterminé par rapport à l'axe principal (32) de l'appareil, en particulier sous un angle de 45°, et présentent un angle de 90° par rapport à l'orientation de l'ouverture de pression de référence du tube de pression statique (3),
**caractérisé en ce que** les tubes de Pitot (1, 2), le tube de pression statique (3) et le convertisseur de pression (10) sont réalisés sous forme d'unité et montés en rotation à l'intérieur d'un tube porteur d'appareil (12) commun qui est agencé en amont devant le rotor de l'installation éolienne et relié au moyeu de rotor.

2. Appareil selon la revendication 1, **caractérisé en ce que** le convertisseur de pression (10) est réalisé sous forme d'appareil de mesure de capteur de pressions extrêmement faibles à plusieurs chambres.

3. Appareil selon l'une des revendications précédentes, **caractérisé en ce qu'**il est prévu un dispositif de chauffage (13) et/ou un dispositif de climatisation pour les tubes de Pitot (1, 2) et pour le tube de pression statique (3).

4. Appareil selon l'une des revendications précédentes, **caractérisé en ce que** des conduites de pression sont agencées entre les tubes de Pitot (1, 2) ainsi qu'entre le tube de pression statique (3) d'une part et le convertisseur de pression (10) d'autre part, des conduites de by-pass étant prévues pour la mise à l'air des conduites de pression.

5. Appareil selon l'une des revendications précédentes, **caractérisé en ce qu'**une liaison radio, en particulier une liaison par télémétrie, est prévue entre le rotor de l'installation éolienne et le convertisseur de pression (10) pour transmettre des données de mesure.
